(19) Europäisches Patentamt
European Patent Office
Office européen des brevets

(11) EP 0 413 788 B1

## (12) FASCICULE DE BREVET EUROPEEN

(45) Date de publication et mention
de la délivrance du brevet:
**06.05.1999 Bulletin 1999/18**

(21) Numéro de dépôt: **90903180.9**

(22) Date de dépôt: **02.02.1990**

(51) Int. Cl.$^6$: **B01D 19/00**, E21B 43/34,
F04D 31/00, F17D 3/03

(86) Numéro de dépôt international:
**PCT/FR90/00085**

(87) Numéro de publication internationale:
**WO 90/08585 (09.08.1990 Gazette 1990/19)**

(54) **DISPOSITIF DE REGULATION ET D'AMORTISSEMENT D'UN ECOULEMENT POLYPHASIQUE ET SON APPLICATION**

REGELUNGS- UND DÄMPFUNGSEINRICHTUNG FÜR EINEN POLYPHASEN
FLÜSSIGKEITSSTROM UND IHRE ANWENDUNG

DEVICE FOR REGULATING AND REDUCING A POLYPHASIC FLOW, AND ITS USE

(84) Etats contractants désignés:
**DE GB IT NL**

(30) Priorité: **02.02.1989 FR 8901332**

(43) Date de publication de la demande:
**27.02.1991 Bulletin 1991/09**

(73) Titulaire:
**INSTITUT FRANCAIS DU PETROLE**
**92502 Rueil-Malmaison (FR)**

(72) Inventeurs:
• **GABRYELCZYK, Daniel**
**F-92500 Rueil-Malmaison (FR)**
• **ARNAUDEAU, Marcel**
**F-75017 Paris (FR)**
• **CESSOU, Maurice**
**F-69360 Saint-Symphorien-d'Ozon (FR)**

(56) Documents cités:
**DE-A- 2 731 279        DE-U- 8 810 901**
**GB-A- 1 412 215        US-A- 4 522 218**
**US-A- 4 708 793**

Remarques:
Le dossier contient des informations techniques
présentées postérieurement au dépôt de la
demande et ne figurant pas dans le présent
fascicule.

## Description

La présente invention concerne un dispositif de régulation et d'amortissement des fluctuations de composition d'un écoulement polyphasique.

Selon l'art antérieur, il est nécessaire d'utiliser des systèmes de vannage à réglage proportionnel, des détecteurs précis et des moyens de pilotage des systèmes de vannage pour obtenir la régulation et l'amortissement des fluctuations mentionnées précédemment.

Or, de tels éléments sont coûteux et fragiles. Ils s'adaptent mal aux conditions de fonctionnement difficiles telles celles rencontrées au fond de l'eau, notamment dans le cadre de l'exploitation de puits pétroliers sous-marins.

L'enseignement du brevet GB-1.412.215 enseigne une méthode de vidange d'une citerne utilisant un dispositif de pompage, où l'on fait recirculer un liquide avec une vitesse suffisante pour permettre la diffusion de la phase gazeuse de l'effluent à vidanger dans la phase liquide, afin d'alimenter le dispositif de pompage avec un fluide homogène.

Le brevet DE-A-2.731.279 divulgue un dispositif pour partager un mélange liquide-gaz en plusieurs courants parties ayant des rapports prédéterminés, indépendamment de la structure initiale du mélange, en réalisant une séparation au préalable des différentes phases.

L'enseignement du document DE-U-8810901 consiste à améliorer la séparation préalable des phases décrites dans le dispositif du brevet DE-A-2.731.279.

La présente invention propose un système simple et robuste ne nécessitant pas l'utilisation de système de vannage à réglage proportionnel, ni l'utilisation de moyens de pilotage compliqués.

Selon la présente invention, on utilise un réservoir dans lequel est introduit le mélange polyphasique et des moyens de prélèvement qui s'étendent sur une certaine hauteur non nulle dans ce réservoir et comportent des ouvertures réparties sur cette hauteur.

Ainsi, pour une position donnée de l'interface liquide-gaz correspond un rapport T de la section de passage de liquide à la section de passage de gaz.

Une variation du niveau de l'interface provoque une variation du rapport T qui a tendance à rétablir l'équilibre à un niveau de référence ou d'équilibre. On obtient ainsi une auto-régulation du niveau et un amortissement des fluctuations de la composition du mélange polyphasique délivré par le dispositif selon l'invention.

Dans la présente invention, il faut bien comprendre que le terme interface peut désigner une surface moyenne de séparation entre une phase gazeuse et une phase liquide. En effet, il peut exister dans les mélanges polyphasiques contenus dans un réservoir une zone où la distinction entre la phase liquide et la phase gazeuse est floue, notamment du fait de la présence de mousse.

Ainsi, la présente invention concerne un système pour acheminer un écoulement polyphasique pétrolier comportant au moins une phase gazeuse et une phase liquide, et pour amortir les fluctuations de composition de l'effluent, comportant en combinaison au moins un dispositif comportant un réservoir de séparation des phases, ledit réservoir comportant au moins une ouverture d'arrivée de l'effluent et des moyens de prélèvement du contenu de ce réservoir, les moyens de prélèvement s'étendent dans le réservoir de manière à traverser l'interface liquide-gaz en cours de fonctionnement normal.

Le système est caractérisé en ce que :

- les moyens de prélèvement comportent des ouvertures réparties de part et d'autre de l'interface en fonctionnement normal, la somme des sections de passage des ouvertures estimée à partir d'une position de référence sur au moins une portion d'un axe vertical variant en fonction de la côte, considérée sur l'axe et pour la portion, la portion s'étendant en fonctionnement normal de part et d'autre de l'interface, et,
- le dispositif ne comporte pas un ensemble de moyens qui sont combinés entre eux, l'ensemble comprenant des moyens de détection du niveau de la phase liquide à l'intérieur du réservoir et des moyens permettant la recirculation d'une quantité de liquide pour diffuser la phase gazeuse à l'intérieur de la phase liquide à l'intérieur d'un dispositif de mélange,
- le dispositif comporte au moins un conduit d'évacuation de l'effluent, le conduit étant relié à l'alimentation d'un moyen de pompage polyphasique.

Les moyens de prélèvement peuvent comporter un tube de prélèvement comportant une sortie commune pour la phase liquide et pour la phase gazeuse.

Les moyens de prélèvement peuvent comporter un tube de prélèvement comportant au moins deux sorties distinctes dont l'une prélève une phase riche en liquide.

Les moyens de prélèvement peuvent comporter un tube de prélèvement comportant au moins deux sorties distinctes dont l'une prélève une phase riche en gaz.

Le système selon l'invention se caractérise en ce que, pour des conditions moyennes stables de l'écoulement en amont dudit réservoir, la section de passage de l'ensemble des ouvertures se trouvant dans la phase gazeuse au-dessus du niveau d'interface liquide-gaz, et la section de passage de l'ensemble des ouvertures se trouvant dans la phase liquide au-dessous dudit niveau moyen, peuvent être dans le rapport des débits volumiques des phase liquide et gaz.

Le réservoir peut comporter dans sa partie inférieure, un volume de réserve supplémentaire, et les moyens de prélèvement peuvent ne pas comporter sur leur portion de longueur qui traverse le volume de réserve supplémentaire, d'ouverture de prélèvement à l'exception d'ouverture située dans la partie inférieure dudit volume de réserve supplémentaire.

Le système peut comporter des moyens de mesure des débits des phases gazeuse et/ou liquide provenant du tube de prélèvement.

Le système peut comporter des moyens auxiliaires pouvant être utilisés temporairement, les moyens pouvant modifier la quantité de liquide prélevé à partir des moyens de prélèvement.

Le système peut comporter des moyens auxiliaires pouvant être utilisés temporairement, les moyens pouvant modifier la quantité de gaz prélevé à partir des moyens de prélèvement.

Le système peut comporter une canalisation auxiliaire permettant l'injection d'une phase liquide et/ou une canalisation auxiliaire permettant l'injection d'une phase gazeuse.

Les moyens de pompage peuvent comporter une pompe hélicoïdale.

Le système s'applique avantageusement pour la production de puits pétroliers sous-marins, le dispositif étant immergé sensiblement au fond de l'eau.

La présente invention sera mieux comprise et ses avantages apparaîtront plus clairement à la description qui suit d'exemples particuliers, nullement limitatifs, illustrés par les figures annexées parmi lesquelles :

- la figure 1 représente un premier mode de réalisation comportant des moyens de prélèvement ayant une seule sortie,
- la figure 2 montre un autre mode de réalisation pour lequel les moyens de prélèvement possèdent deux sorties,
- les figures 3 et 4 représentent deux variantes de réalisation des trous de prélèvement,
- les figures 5, 6 et 7 illustrent différents types de lois de variation du niveau N de l'interface gaz-liquide en fonction du rapport T des sections de passage de liquide et de gaz,

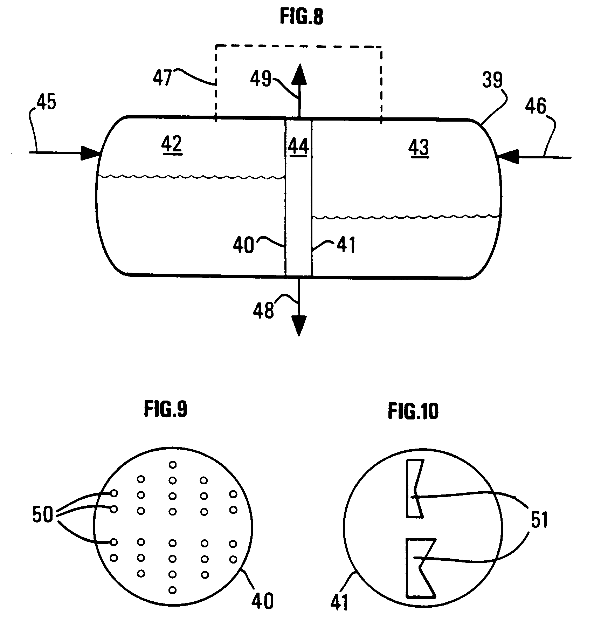

    - tes figures 8, 9 et 10 concernent un réservoir comportant trois compartiments et rassemblant la production provenant de deux sources différentes,

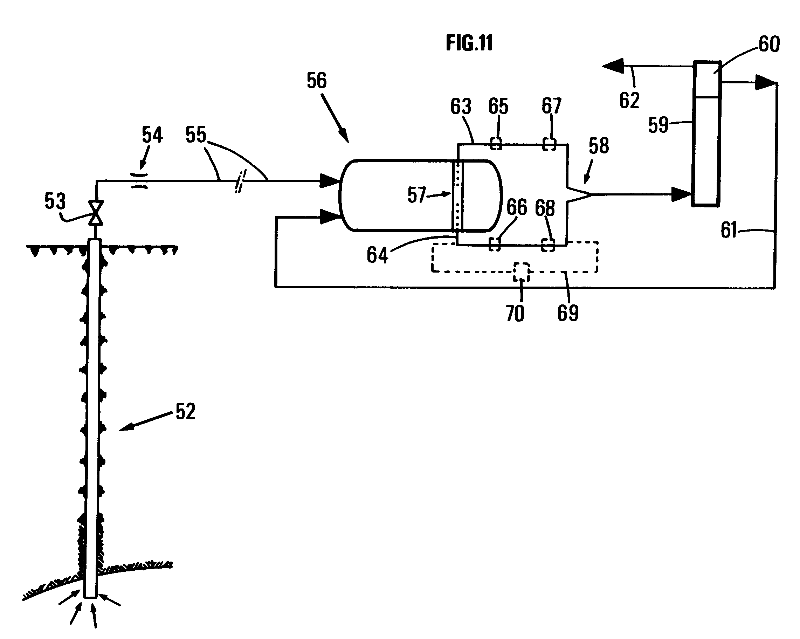

    - la figure 11 montre le dispositif selon l'invention appliqué à l'exploitation d'un puits pétrolier sous-marin, et

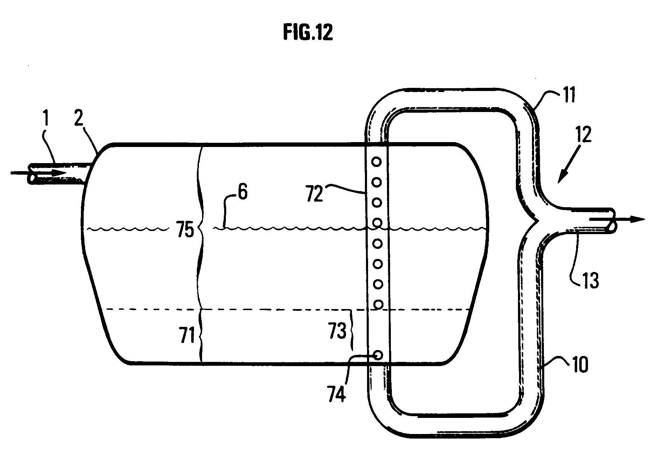

    - la figure 12 montre un aménagement aux dispositifs selon l'invention qui permet d'absorber les poches de gaz apparaissant au moment du redémarrage du système, notamment lorsque celui-ci est appliqué à la production de fluide pétrolier diphasique.

La référence 1 désigne le tube d'arrivée d'un mélange polyphasique dans un réservoir 2 de transfert. Ce réservoir comporte un tube de prélèvement 3. Ce tube comporte des trous 4 répartis sur sa longueur. Le tube 3 est raccordé à un tube 5 de sortie du mélange polyphasique vers le lieu de destination. La référence 6 désigne l'interface gaz-liquide.

Dans te cas d'exploitation pétrolière, le tube 1 peut être le tube de collecte de la production d'un ou de plusieurs puits, notamment de puits sous-marins et le tube de sortie 5 peut être dirigé vers l'entrée d'une pompe polyphasique servant à acheminer l'effluent vers un site de traitement.

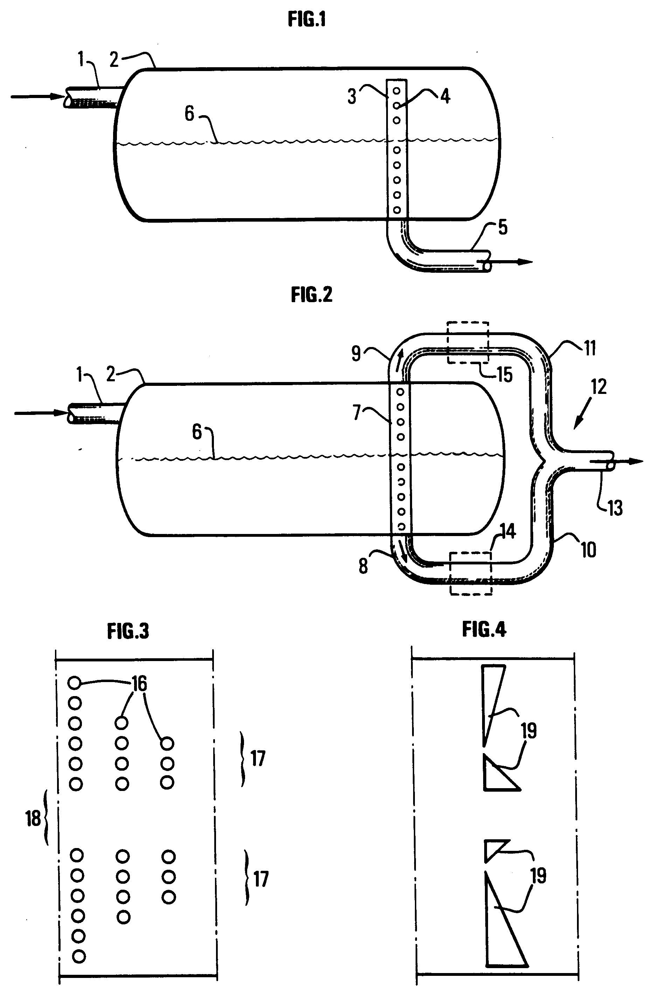

La figure 2 représente un autre mode de réalisation. Les éléments communs aux figures 1 et 2 portent les mêmes références. Le tube de prélèvement 7 traverse de part en part le réservoir dans le sens de la hauteur et possède deux sorties, l'une basse 8 et l'autre haute 9 connectées respectivement à un tube d'acheminement bas 10 et un tube d'acheminement haut 11. Ces deux tubes se rejoignent en 12 et le mélange résultant est transféré par le tube 13. Les tubes d'acheminement 10 et 11 peuvent comporter des moyens de mesure permettant de mesurer le débit passant dans chacun de ces tubes. Une telle mesure peut permettre d'optimiser le fonctionnement d'éventuels équipements aval traitant le mélange résultant. De tels équipements peuvent être une pompe diphasique dont la vitesse de rotation peut être réglée en fonction des mesures de débit mentionnées précédemment.

Le tube d'acheminement bas 10 transfère un effluent essentiellement liquide alors que c'est l'effluent essentiellement gazeux que transporte le tube d'acheminement haut 11. Les moyens de mesure de débits 14 et 15 passant respectivement dans les tubes d'acheminement bas 10 et haut 11 n'ont pas besoin d'être très précis. Le fonctionnement du dispositif selon les modes de réalisation des figures 1 et 2 est donné ci-après.

Le réservoir ou ballon régulateur diphasique 2 a pour but de réduire les variations de GOR que l'on peut observer dans un écoulement diphasique intermittent (écoulement à bouchons de liquide et à poches de gaz), de transformer un écoutement à bouchons en un écoulement à bulles (écoulement homogène), de disposer d'une réserve de liquide suffisante pour évacuer une quantité important de gaz. Par GOR, on entend le rapport de volume de gaz au volume de liquide (en anglais "Gas Oil Ratio").

Le ballon est un équipement statique qui permet de transformer une variation de GOR du fluide à l'entrée en une variation de niveau dans le ballon, cette variation de niveau pouvant être de faible amplitude (cas d'un ballon cylindrique à axe horizontal) ou d'amplitude plus forte (cas d'un ballon cylindrique à axe vertical).

De plus, la quantité de liquide retenue dans le ballon peut constituer une réserve utilisable pour mouiller une poche de gaz sec importante (plusieurs mètres cubes) et l'évacuer avec un GOR permettant d'obtenir un gain de pression suffisant avec un système de pompage diphasique. Ce ballon peut servir également à recevoir, en cas d'utilisation d'un recycleur de phase, la phase liquide ou gazeuse extraite du mélange diphasique à la sortie de l'unité de compression. Dans le cadre d'une application pétrolière, ce ballon peut aussi servir à séparer une partie de l'eau contenue dans l'effluent pétrolier, et à séparer une partie du sable contenu dans l'effluent pétrolier.

Ce ballon est équipé d'un tube percé permettant la sortie du mélange diphasique.

L'évacuation du fluide diphasique séparé ou partiellement séparé dans te ballon, est faite par le tube percé 3 ou 7 selon que l'on considère le mode de réalisation de la figure 1 ou 2, placé verticalement dans le ballon 2. Ce tube permet d'évacuer le liquide proportionnellement au niveau de l'interface 6 dans le ballon, c'est-à-dire proportionnellement à la section de passage immergée SL. De même, le gaz est évacué proportionnellement à la section de passage non immergée SG.

Si on appelle Pi, la pression statique dans te ballon au niveau d'un orifice i du tube percé et Ps la pression du fluide à la sortie du tube percé, les débits de sortie du liquide et du gaz sont donnés par la relation :

$$Pi - Ps = f(Qi)$$

Qi : débit de fluide passant au travers d'un orifice i.

La fonction f(Qi) prend en compte la perte de pression au travers de l'orifice (ou le gain de pression donné par te fluide descendant -effet éjecteur-), la perte de charge linéaire dans le tube, ainsi que les pertes de charge dues aux jonctions (orifices suivants).

Bien que l'expression analytique de la fonction f(Qi) ne soit pas connue, on imagine aisément que la section de passage (section des orifices) nécessaire à l'évacuation d'un volume de liquide doit être plus importante que la section de passage nécessaire à l'évacuation d'un volume de gaz. Donc la densité de trou à la partie inférieure du tube percé sera plus importante qu'à la partie supérieure de ce tube (sauf cas de fonctionnement à GOR très élevé ou à pression élevée). Le dimensionnement du tube de sortie sera fait de préférence de façon à ce que la plage normale de variation du niveau soit située au milieu du ballon. Ceci peut être réalisé après expérimentation.

Des essais du dispositif selon l'invention ont montré qu'il était possible d'absorber des variations brutales de GOR pouvant survenir à la sortie d'une conduite et de délivrer un fluide diphasique dont la masse volumique est pratiquement constante et égale à la masse volumique moyenne du fluide à l'entrée du ballon (moyenne dans le temps). De plus, ce ballon peut constituer une réserve de liquide destinée à évacuer, par la pompe diphasique, une poche de gaz sec très importante (cette poche de gaz peut apparaître au cours des des phases de démarrage de puits).

La figure 3 représente de manière développée un mode de réalisation du tube de prélèvement dans lequel sont pratiqués des trous circulaires 16. On constate que dans ce mode de réalisation, la densité de trous est la plus importante au voisinage 17 de la zone centrale du tube. Toutefois, la zone centrale en elle-même 18 ne comporte pas de trou, de manière à ne pas répercuter les variations de GOR tant que le niveau de l'interface gaz-liquide ne s'est pas déplacé d'une certaine valeur.

La figure 4 donne un autre mode de réaisation du tube de prélèvement qui est représenté de manière développée. Les ouvertures de prélèvement ont la forme de triangle 19. Ainsi, il apparait que la forme des ouvertures importe peu. Ce qui importe, ce sont les variations du T en fonction de cote moyenne de l'interface dans le réservoir.

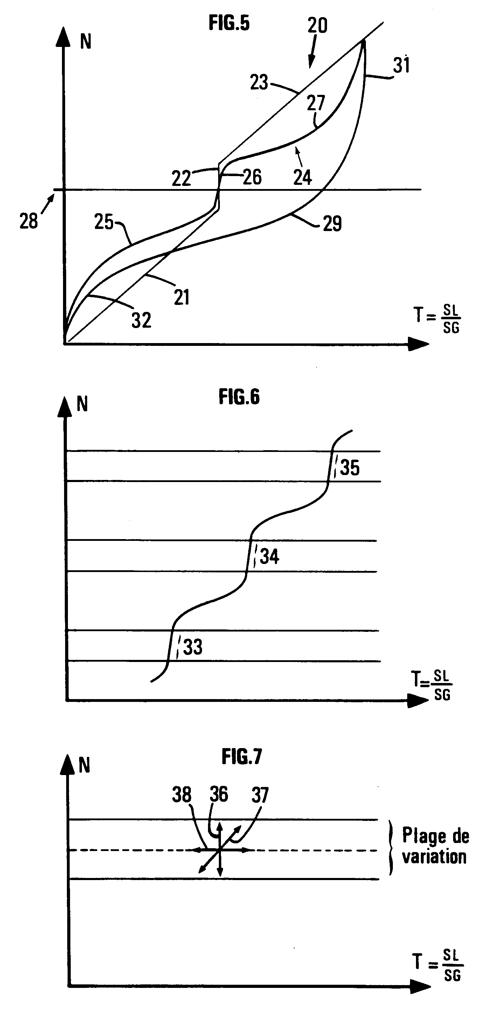

La figure 5 représente trois lois de variations du rapport T :

$$T = \frac{\text{section de passage du liquide}}{\text{section de passage du gaz}}$$

en fonction du niveau N de l'interface dans le réservoir. La courbe 20 est une courbe composée de trois segments de droite 21, 22 et 23. La portion 22 correspond à une zone pour laquelle une variation de niveau de l'interface n'entraîne pas une grande variation de la composition du mélange résultant. Au-delà de cette zone, il y a une variation du GOR du mélange prélevé qui répercute dans une certaine mesure les variations de GOR à l'entrée du ballon. La courbe 24 comporte également trois zones 25, 26 et 27. La zone 26 correspond à un fonctionnement sensiblement similaire à celui de la zone 22 de la courbe 20. Le fonctionnement obtenu par la courbe 24 correspond à un rétablissement rapide du niveau de l'interface vers te niveau consigne 28 puisqu'une fois la zone 26 déposée que ce soit dans un sens ou dans l'autre, il y a une variation rapide de T qui tend à éliminer rapidement le surplus d'eau ou de gaz selon le cas. La courbe 29 quant à elle correspond à une toi qui favorise le démarrage d'un puit.

Le profit des perforations sur le tube percé est lié à la durée et l'amplitude des perturbations à l'entrée, à la position du niveau moyen donnant te GOR moyen de sortie souhaité, et à la variation de GOR admissible en sortie. Une pente élevée en haute 31 ou en bas 32 du tube permet d'"'économiser" du gaz ou du liquide dans le réservoir.

La figure 6 représente te cas d'une loi ayant trois plages 33, 34 et 35 de régulation à faible répercution des variations du GOR à l'entrée correspondant à trois niveaux de GOR différents. Une telle loi peut être intéressante dans le cas, par exemple, où l'on exploite deux puits différents simultanément. Ces différentes plages peuvent être déterminées en fonction des caractéristiques de chacun des puits et des différents schémas d'exploitation retenus. Par exemple, la plage 33 peut correspondre à la régulation lorsque seul le puit 1 produit, la plage 35 lorsque seul le puit 2 produit, et la plage 34 lorsque tes deux puits 1 et 2 produisent simultanément.

La figure 7 représente de manière schématique l'influence de la pente de la courbe de variation de T = SL/SG en fonction du niveau.

$$\text{pente} = \frac{d\,(\text{niveau})}{d\left(\frac{SL}{SG}\right)}$$

Lorsque la pente tend vers l'infini, cas de la pente 36, les variations de niveau n'ont aucune répercussion sur te GOR de sortie. Lorsque la pente est positive et égale à une valeur finie, cas de la pente 37, les variations de niveau donnent une variation du GOR de sortie. Pour une même variation du niveau, plus la pente est petite et plus la variation du GOR sortie sera grande. La pente nulle, cas 38, correspond au cas extrème du déversoir.

Dans le cas où le ballon est horizontal et qu'il présente une section circulaire et si le niveau moyen est au milieu du ballon, une perturbation du GOR à l'entrée du ballon va conduire à une variation faible du niveau donc à une variation faible du GOR de sortie (pour des perforations données) le niveau varie moins vite lorsque l'on est dans la grande "largeur" que lorsque l'on est en haut ou en bas du ballon.

La figure 8 représente un réservoir 39 comportant deux cloisons 40 et 41 qui partagent le réservoir en trois compartiments 42, 43 et 44. Le compartiment central 44 correspond avec les cloisons 40 et 41 au moyen de prélèvements. Le compartiment 42 reçoit en 45 la production d'une première source d'effluent diphasique, tel qu'un premier puits et le compartiment 43 reçoit en 46 la production d'une deuxième source d'effluent diphasique, tel qu'un deuxième puits.

La référence 47 désigne une conduite d'égalisation des pressions entre les compartiments 42 et 43. Les flèches 48 et 49 correspondent à des conduites d'acheminement basse et haute connectées aux moyens de prélèvement.

La figure 9 montre un mode de réalisation de la cloison 40 qui comporte des trous circulaires 50.

La figure 10 montre un mode de réalisation de la cloison 41 qui comporte des trous 51 ayant sensiblement la forme de la lettre K.

La figure 11 montre le dispositif selon l'invention appliqué à la production d'un effluent pétrolier diphasique produit par un puits sous-marin 52 équipé d'une tête de puits 53, d'une duse de réglage 54, d'une ligne d'évacuation 55 alimentant un ballon 56 selon la présente invention ayant des moyens de prélèvement 57 à deux sorties qui se rejoignent en 58 pour alimenter l'unité de pompage diphasique 59. L'effluent pompé peut être traité dans un séparateur 60 recyclant une partie de la phase liquide dans le réservoir 56 grâce à la ligne de recyclage 61.

La référence 62 désigne le pipeline de transfert de la production. Les sorties haute 63 et basse 64 du réservoir 56 peuvent être équipées de moyens de mesure de débit, 65 et 66 respectivement et de vannes tout ou rien télécommandées 67 et 68 assurant un contrôle de fonctionnement de l'installation. Par ailleurs, le dispositif peut comporter une ligne annexe 69 de prélèvement de la phase essentiellement liquide, cette ligne comportant une vanne tout ou rien 70. Cette ligne sera avantageusement utilisée pour remplir te réservoir 56 de liquide avant l'arrêt de la production. Cette réserve de liquide assurera un amorçage facile de l'installation lors du redémarrage de l'installation. Ce résultat est obtenu en fermant la vanne 68 et en ouvrant la vanne 70 avant l'arrêt de la production. L'ensemble vanne 70 et ligne annexe 69 à une perte de charge calibrée permettant le fonctionnement de la pompe 59 avec une quantité de liquide minimum. Ainsi, pendant cette phase de fonctionnement, le niveau de liquide monte dans le réservoir 56.

La figure 12 illustre une variante plus simple que celle de la figure 11 pour permettre d'assurer le redémarrage de l'installation après un arrêt. Le redémarrage de l'installation après arrêt pose un problème en ce que durant cet arrêt, le puits et les lignes de production sont remplis de gaz. Ainsi, au redémarrage de la production, il faut traiter une poche de gaz ayant un grand volume, par exemple de l'ordre de 20 m$^3$ à 25 m$^3$.

Pour résoudre ce problème, il est proposé que le réservoir comporte à sa partie inférieure un volume de réserve supplémentaire 71.

La portion de longueurs 73 du tube 72 percé d'orifices traversant cette réserve supplémentaire, ne comporte pas de perçage à l'exception d'un perçage 74, ou ouverture, à sa partie inférieure.

Le volume de réserve supplémentaire 71 et le calibrage du perçage 74 sont prévus pour permettre de traiter le volume de la poche de gaz survenant au redémarrage. C'est-à-dire, pour produire un mélange résultant dans le tube ou canalisation 13, ayant des caractéristiques et notamment un GOR qui permet le traitement par un équipement de pompage.

En fonctionnement normal, du fait des caractéristiques de la source de mélange polyphasique arrivant par le tube 1 et du dimensionnement du tube percé 72, l'interface gaz-liquide se situe dans la zone 75.

Ainsi, au moment de l'arrêt du système, on est assuré d'avoir au minimum te volume de réserve supplémentaire 71 rempli de liquide.

Ce volume est suffisant pour permettre de mouiller la poche de gaz survenant au démarrage et pour obtenir un mélange diphasique polyphasique dans le tube 13 ayant un GOR suffisant pour être traité par l'équipement de pompage.

La figure 12 est dérivée de la figure 2 et les éléments communs à ces deux figures portent les mêmes références.

La variante décrite en relation avec la figure 12 peut être également appliquée au dispositif de la figure 1.

Les différents dispositifs selon la présente invention sont particulièrement bien adaptés à la production d'effluent pétrolier polyphasique, notamment en milieu sous-marin.

En effet, le réservoir équipé d'un tube selon l'invention peut être placé au fond de l'eau pour produire les effluents pétroliers diphasiques provenant de puits sous-marins.

L'équipement de pompage associé pourra avantageusement être une pompe du type hélicoaxiale.

**Revendications**

1. Système pour acheminer un écoulement polyphasique pétrolier comportant au moins une phase gazeuse et une phase liquide, et amortir les fluctuations de composition dudit effluent, comportant en combinaison au moins un dispositif comportant un réservoir de séparation desdits phases, ledit réservoir comportant au moins une ouverture d'arrivée dudit effluent et des moyens de prélèvement du contenu de ce réservoir, lesdits moyens de prélèvement s'étendent dans ledit réservoir de manière à traverser l'interface liquide-gaz en cours de fonctionnement normal, caractérisé en ce que

    • lesdits moyens de prélèvement (3, 7, 40, 41) comportent des ouvertures réparties de part et d'autre de ladite interface en fonctionnement normal, la somme des sections de passage desdites ouvertures estimée à partir d'une position de référence sur au moins une portion d'un axe vertical variant en fonction de la côte, considérée sur ledit axe et pour ladite portion, ladite portion s'étendant en fonctionnement normal de part et d'autre de ladite interface, et en ce que,
    • ledit dispositif ne comporte pas un ensemble de moyens qui sont combinés entre eux, ledit ensemble comprenant des moyens de détection du niveau de la phase liquide à l'intérieur du réservoir et des moyens permettant la recirculation d'une quantité de liquide pour diffuser la phase gazeuse à l'intérieur de la phase liquide à l'intérieur d'un dispositif de mélange,
    • ledit dispositif comporte au moins un conduit d'évacuation (5) dudit effluent, ledit conduit étant relié à l'alimentation d'un moyen de pompage polyphasique.

2. Système selon la revendication 1, caractérisé en ce que lesdits moyens de prélèvement comportent un tube de prélèvement comportant une sortie commune pour la phase liquide et pour la phase gazeuse.

3. Système selon la revendication 1, caractérisé en ce que lesdits moyens de prélèvement comportent un tube de prélèvement comportant au moins deux sorties distinctes dont l'une prélève une phase riche en liquide (figures 2, 8, 11).

4. Système selon la revendication 1, caractérisé en ce que lesdits moyens de prélèvement comportent un tube de prélèvement comportant au moins deux sorties distinctes dont l'une prélève une phase riche en gaz.

5. Système selon l'une des revendications précédentes, caractérisé en ce que pour des conditions moyennes stables de l'écoulement en amont dudit réservoir, la section de passage de l'ensemble des ouvertures se trouvant dans la phase gazeuse au-dessus du niveau d'interface liquide-gaz, et la section de passage de l'ensemble des ouvertures se trouvant dans la phase liquide au-dessous dudit niveau moyen, sont dans le rapport des débits volumiques des phase liquide et gaz.

6. Système selon l'une des revendications 1 à 5, caractérisé en ce que ledit réservoir comporte dans sa partie inférieure, un volume de réserve supplémentaire, et en ce que lesdits moyens de prélèvement ne comportent pas sur leur portion de longueur qui traverse ledit volume de réserve supplémentaire, d'ouverture de prélèvement à l'exception d'ouverture située dans la partie inférieure dudit volume de réserve supplémentaire.

7. Système selon l'une des revendications précédentes, caractérisé en ce qu'il comporte des moyens (14, 15) de mesure des débits des phases gazeuse et/ou liquide provenant dudit tube de prélèvement.

8. Système selon l'une des revendications 1 à 7, caractérisée en ce qu'il comporte des moyens auxiliaires (69, 70) pouvant être utilisés temporairement, lesdits moyens pouvant modifier la quantité de liquide prélevé à partir desdits moyens de prélèvement.

9. Système selon l'une des revendications 1 à 7, caractérisé en ce qu'il comporte des moyens auxiliaires (69, 70) pouvant être utilisés temporairement, lesdits moyens pouvant modifier la quantité de gaz prélevé à partir desdits moyens de prélèvement.

10. Système selon l'une des revendications 1 à 9 caractérisé en ce qu'il comporte une canalisation auxiliaire permettant l'injection d'une phase liquide et/ou une canalisation auxiliaire permettant l'injection d'une phase gazeuse.

11. Système selon la revendication 1, caractérisé en ce que les moyens de pompage comportent une pompe hélicoïdale.

12. Application du système selon l'une des revendications précédentes, pour la production de puits pétroliers sous-marins, ledit dispositif étant immergé sensiblement au fond de l'eau.

**Claims**

1. A system for conveying a multi-phase petroleum flow containing at least a gaseous phase and at least a liquid phase and for cushioning the fluctuations in composition of said effluent, consisting, in combination, of at least a device having a tank for separating said phases, said tank having at least one inlet opening for said effluent and means for running off the contents of this tank, said running-off means extending inside said tank so as to cross through the liquid-gas interface during normal operation, characterised in that

- said running-off means (3, 7, 40, 41) have openings distributed on either side of said interface during normal operation, in which the sum of the passage sections of said openings, estimated from a reference position across at least a portion of a vertical axis, varies depending on the level, considered on said axis and for said portion, said portion extending on either side of said interface during normal operation, and in that
- the device does not have a system of means combined with one another, the system comprising means for detecting the level of the liquid phase inside the tank and means allowing a quantity of liquid to be re-circulated in order to diffuse the gaseous phase in the liquid phase inside a mixing device,
- said device having at least one discharge pipe (5) for said effluent, said pipe being linked to the input of a multi-phase pumping means.

2. A system as claimed in claim 1, characterised in that said running-off means consist of a drawing-off tube having a common outlet for the liquid phase and for the gaseous phase.

3. A system as claimed in claim 1, characterised in that said running-off means consist of a drawing-off tube having at least two separate outlets, one of which is for running off a phase with a high liquid content (figures 2, 8, 11).

4. A system as claimed in claim 1, characterised in that said running-off means consist of a drawing-off tube having at least two separate outlets, one of which is for running off a phase with a high gas content.

5. A system as claimed in one of the preceding claims, characterised in that when the flow upstream of said tank is under average and stable conditions, the passage section of the set of openings located in the gaseous phase above the level of the liquid-gas interface level and the passage section of the set of openings located in the liquid phase below said level are within the ratio of the flows by volume of the liquid and gas phases.

6. A system as claimed in one of claims 1 to 5, characterised in that said tank has an additional reserve volume at its bottom part and in that said running-off means do not have a running-off opening on their portion of length crossing through said additional reserve volume except for an opening located in the lower part of said additional reserve volume.

7. A system as claimed in one of the preceding claims, characterised in that it has means (14, 15) for measuring the flows rates of the gaseous and/or liquid phases arriving from said running-off tube.

8. A system as claimed in one of claims 1 to 7, characterised in that it has auxiliary means (69, 70) which can be used temporarily, said means being able to modify the quantity of liquid drawn off from said running-off means.

9. A system as claimed in one of claims 1 to 7, characterised in that it has auxiliary means (69, 70) which can be used temporarily, said means being able to modify the quantity of gas drawn off from said running-off means.

10. A system as claimed in one of claims 1 to 9, characterised in that it has an auxiliary passage allowing a liquid phase to be injected and/or an auxiliary passage allowing a gaseous phase to be injected.

11. A system as claimed in claim 1, characterised in that the pumping means are an axial pump.

12. Application of the system claimed in one of the preceding claims to the production of sub-sea oil wells, said device being essentially submerged on the sea bed.

**Patentansprüche**

1. System zur Führung einer polyphasischen Erdölströmung mit wenigstens einer gasförmigen Phase und einer flüssigen Phase und zur Dämpfung der Schwankungen der Zusammensetzung dieses Abstroms, in Kombination umfassend wenigstens eine Vorrichtung, die einen Trennspeicher für diese Phasen umfaßt, wobei dieser Speicher wenigstens eine Einlaßöffnung für diesen Abstrom und Entnahmemittel für den Inhalt dieses Speichers umfaßt, diese Entnahmemittel sich in diesem Speicher derart erstrecken, daß sie die Flüssigkeit-Gasgrenzfläche während des Normalbetriebs durchsetzen, dadurch gekennzeichnet, daß

- diese Entnahmemittel (3, 7, 40, 41) Öffnungen umfassen, die zu beiden Seiten dieser Grenzfläche im Normalbetrieb verteilt sind, wobei die Summe der Durchgangsquerschnitte dieser Öffnungen, abgeschätzt aus einer Bezugsposition über wenigstens einen Teil einer Vertikalachse, als Funktion zur Neigung oder des Standes, gegen diese Achse und für diesen Teil betrachtet, variiert, dieser Teil sich im Normalbetrieb zu beiden Seiten der Grenzfläche erstreckt und daß
- diese Einrichtung keine Anordnung von Mitteln umfaßt, die untereinander kombiniert sind, diese Anordnung Nachweismittel für das Niveau der flüssigen Phase im Inneren des Speichers und Mittel umfaßt, welche die Rezirkulation eines Teils der Flüssigkeit zum Durchleitenlassen der gasförmigen Phase in das Innere der flüssigen Phase im Inneren einer Mischvorrichtung gestatten und
- diese Einrichtung wenigstens eine Abzugsleitung (5) für diesen Abstrom umfaßt, wobei die Leitung mit einer Speisung für ein polyphasisches Pumpmittel verbunden ist.

2. System nach Anspruch 1, dadurch gekennzeichnet, daß diese Entnahmemittel ein Entnahmerohr umfassen, das einen gemeinsamen Ausgang für die flüssige Phase und für die gasförmige Phase hat.

3. System nach Anspruch 1, dadurch gekennzeichnet, daß diese Entnahmemittel ein Entnahmerohr umfassen, das wenigstens zwei unterschiedliche Ausgänge aufweist, von denen einer eine an Flüssigkeit reiche Phase entnimmt (Figuren 2, 8, 11).

4. System nach Anspruch 1, dadurch gekennzeichnet, daß die Entnahmemittel ein Entnahmerohr umfassen, das wenigstens zwei unterschiedliche Ausgänge aufweist, von denen einer eine an Gas reiche Phase entnimmt.

5. System nach einem der vorhergehenden Ansprüche, dadurch gekennzeichnet, daß für mittlere stabile Strömungsbedingungen vor diesem Speicher der Durchlaßquerschnitt der Gesamtheit der Öffnungen, die sich in der Gasphase oberhalb des Niveaus einer Flüssigkeit-Gasgrenzfläche befinden und der Durchgangsquerschnitt der Gesamtheit der Öffnungen, die sich in der flüssigen Phase unterhalb dieses mittleren Niveaus befinden, in dem Verhältnis der volumenbezogenen Durchsätze der Flüssigkeitsphase und Gasphase sind.

6. System nach einem der Ansprüche 1 bis 5, dadurch gekennzeichnet, daß der Speicher in seinem unteren Teil ein zusätzliches Reservevolumen umfaßt und daß diese Entnahmemittel auf ihrem Längenteil, der dieses zusätzliche Reservevolumen durchsetzt, keine Entnahmeöffnung mit Ausnahme der Öffnung umfaßt, die sich im unteren Teil dieses zusätzlichen Reservevolumens befindet.

7. System nach einem der vorhergehenden Ansprüche, dadurch gekennzeichnet, daß es Mittel (14, 15) zum Messen der Durchsätze der gasförmigen und/oder flüssigen aus diesem Entnahmerohr stammenden Phasen umfaßt.

8. System nach einem der Ansprüche 1 bis 7, dadurch gekennzeichnet, daß es Hilfsmittel (69, 70) umfaßt, die temporär sich verwenden lassen, wobei diese Mittel die Menge an Entnahme einer Flüssigkeit aus diesen Entnahmemitteln modifizieren können.

9. System nach einem der Ansprüche 1 bis 7, dadurch gekennzeichnet, daß es Hilfsmittel (69, 70) umfaßt, die temporär benutzt werden können, wobei diese Mittel die Menge an aus diesen Entnahmemitteln entnommenem Gas modifizieren können.

10. System nach einem der Ansprüche 1 bis 9, dadurch gekennzeichnet, daß es eine Hilfsleitung umfaßt, die die Injektion einer flüssigen Phase und/oder eine Hilfsleitung umfaßt, die die Injektion einer gasförmigen Phase ermöglicht.

11. System nach Anspruch 1, dadurch gekennzeichnet, daß die Pumpmittel eine Spiralpumpe umfassen.

12. Anwendung des Systems nach einem der vorhergehenden Ansprüche auf die Produktion von Unterwasserbohrlöchern, wobei die Einrichtung im wesentlichen auf den Meeresboden abgetaucht ist.

**FIG.1**

**FIG.2**

**FIG.3**

**FIG.4**

FIG.5

FIG.6

FIG.7

**FIG.8**

47   49   39   46
45   42   44   43
40   41
48

**FIG.9**

50   40

**FIG.10**

41   51

**FIG.11**

EP 0 413 788 B1

**FIG.12**